# EUROPÄISCHE PATENTSCHRIFT

(11) **EP 3 611 343 B1**
(45) Veröffentlichungstag und Bekanntmachung des Hinweises auf die Patenterteilung: **24.08.2022**
(21) Anmeldenummer: 19186673.0
(22) Anmeldetag: 17.07.2019
(51) Int. Cl.: F01D 5/28, F01D 11/12

(54) **BAUELEMENT MIT EINER HAFTSTRUKTUR FÜR EINE TURBOMASCHINE, VERFAHREN ZUR HERSTELLUNG EINES BAUELEMENTES MIT EINER HAFTSTRUKTUR FÜR EINE TURBOMASCHINE UND TURBOMASCHINE MIT EINEM BAUELEMENT MIT EINER HAFTSTRUKTUR**
COMPONENT COMPRISING AN ADHESIVE STRUCTURE FOR A TURBOMACHINE, METHOD FOR PRODUCING A COMPONENT WITH AN ADHESIVE STRUCTURE FOR A TURBOMACHINE AND TURBOMACHINE COMPRISING A COMPONENT WITH AN ADHESIVE STRUCTURE
COMPOSANT POUR UNE STRUCTURE ADHÉSIVE D'UNE TURBOMACHINE, PROCÉDÉ DE FABRICATION D'UN COMPOSANT DOTÉ D'UNE STRUCTURE ADHÉSIVE POUR UNE TURBOMACHINE OU TURBOMACHINE DOTÉE D'UN COMPOSANT DOTÉ D'UNE STRUCTURE ADHÉSIVE

(30) Priorität: 13.08.2018 DE 102018119608
(43) Veröffentlichungstag der Anmeldung: 19.02.2020
(73) Patentinhaber: Rolls-Royce Deutschland Ltd & Co KG, 15827 Blankenfelde-Mahlow (DE); Forschungszentrum Jülich GmbH, 52425 Jülich (DE)
(72) Erfinder: Schrüfer, Susanne, 15827 Blankenfelde-Mahlow (DE); Vaßen, Robert, 52134 Herzogenrath (DE); Mack, Daniel E., 50931 Köln (DE); Tandler, Martin, 41751 Viersen (DE); Kurze, Frank, 52441 Linnich (DE)
(74) Vertreter: Maikowski & Ninnemann Patentanwälte Partnerschaft mbB

(56) Entgegenhaltungen:
- EP-A1- 3 150 741
- EP-A2- 2 687 685
- DE-A1-102015 222 808
- US-A- 5 683 761
- US-A1- 2018 066 527

## Beschreibung

Die Erfindung betrifft ein Bauelement mit einer Haftstruktur für Turbomaschinen mit den Merkmalen des Anspruchs 1, ein Verfahren zur Herstellung eines Bauelementes mit einer Haftstruktur für eine Turbomaschine mit den Merkmalen des Anspruchs 13 und eine Turbomaschine mit einem Bauelement mit einer Haftstruktur mit den Merkmalen des Anspruchs 14.

In Turbomaschinen, wie z. B. Flugzeugtriebwerken oder stationären Dampf- oder Gasturbinen, werden im Betrieb sehr hohe Arbeitstemperaturen erreicht. In modernen Flugzeugtriebwerken können z. B. bis über 2.000 K erreicht werden. Dadurch werden bestimmte Teile der Turbomaschine, wie z. B. Brennkammern oder der Eingangsbereich der Turbine in einem Flugtriebwerk, sehr hohen thermischen Belastungen unterworfen. Des Weiteren müssen diese Bauelemente zusätzlich, insbesondere beim Anlaufen einer Turbine, hohe mechanische Belastungen aushalten, da die Spitzen der Turbinenschaufeln zumindest kurzfristig in Kontakt mit der Turbinenwandung kommen.

Es ist daher bekannt, bestimmte Teile der Turbomaschine mit einer mechanisch stabilen, hitzebeständigen, mehrlagigen Schicht zu überziehen. Z.B. aus der EP 1 491 658 A1 ist eine solche mehrlagige Beschichtung bekannt. Auf eine metallische Unterlage wird eine so genannte metallische Bond-Coat-Schicht (Haftvermittlerschicht) aufgebracht, auf die wiederum eine keramische Schicht aufgebracht wird. Zusammen werden diese beiden Schichten auch als Wärmedämmschicht (Thermal Barrier Coating, TBC) bezeichnet. Derartige Wärmedämmschichten sind auch aus der EP 3 150 741 A1 oder der US 2018/0066527 A1 bekannt. Die DE 10 2005 050 873 A1, DE 10 2015 222 808 A1, EP 2 687 685 A2 und DE 10 2011 085 801 A1 betreffen strukturierte Hochtemperaturbeschichtungen.

Daher ist es sinnvoll, thermisch und mechanisch stabile Bauelemente zu entwickeln, die sicher mit einer Hochtemperaturbeschichtung verbindbar sind, wobei die Herstellung des Bauelementes wirtschaftlich sein muss.

Die Aufgabe wird durch ein Bauelement mit den Merkmalen des Anspruchs 1 gelöst.

Das Bauelement weist eine Basis auf, auf der eine Haftschicht mit einer Haftstruktur angeordnet ist. Über der Haftschicht ist eine keramische Schicht angeordnet.

Die Seitenflächen der Haftstruktur sind im Querschnitt hinterschneidungsfrei ausgebildet. wobei Peakstrukturen und / oder Muldenstrukturen vorliegen können.

Die Spitze des Querschnitts einer Peakstruktur weist im Mittel einen Spitzenwinkel α im Bereich α ≤ 90°, insbesondere α ≤ 45°, auf. Die Muldenstruktur weist einen Talwinkel β im Bereich 90° ≤ β < 170° auf.

Hinterschneidungsfrei bedeutet, dass die Querschnittsbreite der Haftstruktur zur Spitze monoton, insbesondere streng kleiner wird. Eine Peakstruktur weist einzelne, aus einer Grundfläche herausragende Spitzen (Peaks) oder eine spitz zulaufende Rippe auf. Eine Muldenstruktur weist einzelne Vertiefungen in einer Grundfläche auf. Grundsätzlich ist es möglich, Peakstrukturen und Muldenstrukturen miteinander zu kombinieren.

Eine solche Haftstruktur lässt sich aus der Haftschicht insbesondere mit einem ablativen Laserbearbeitungsverfahren herstellen, was wirtschaftlicher als eine Herstellung z.B. mit einem Laser-Depositionverfahren ist.

Die Höhe der Haftstruktur bemisst sich von der Oberfläche der Haftschicht, aus der die Haftstruktur z.B. herausgearbeitet wurde. Dabei wird die Höhe der Haftstruktur bei einer Muldenstruktur von der Bodenfläche aus gemessen. So kann das Verhältnis der Dicke der Haftschicht zur Höhe der Struktur 0,1 bis 10, insbesondere 0,3 bis 3 betragen.

Entsprechend der Erfindung ist das Verhältnis der Höhe der Haftstrukturen zum Abstand der Haftstrukturen untereinander im Bereich von 0,1 bis 5, insbesondere zwischen 0,3 und 3, liegen.

In einer Ausführungsform kann das Bauelement eine strukturierte Oberfläche mit einer Rauheit Rₐ (mittlere Rauheit) nominal zwischen 5 µm und 25 µm aufweisen.

Erfindungsgemäße Ausführungsformen des Bauelementes haben Haftstrukturen als Linienstruktur. Vorzugweise können Haftstrukturen als Linienstruktur mit Haftstrukturen als Punktstruktur, als Gitterstruktur und / oder als Wabenstruktur miteinander kombiniert werden. So können z.B. eine Linienstruktur und eine Punktstruktur miteinander durch Überlagerung kombiniert werden Die Haftstrukturen können dabei auch komplexen Oberflächen folgen. Die Höhe des Querschnitts der Haftstruktur kann entlang einer räumlichen Ausdehnung, z.B. in einer linearen Gitterstruktur, der Haftstruktur im Wesentlichen konstant sein, so dass z.B. eine Art Wand mit einer konstanten Höhe vorliegt.

Insbesondere kann die maximale Höhe des Querschnitts der Haftstruktur an Kreuzungspunkten der Haftstruktur, insbesondere in einer Gitterstruktur, im Vergleich zur Höhe der Haftstruktur außerhalb der Kreuzungspunkte variieren. Somit würde z.B. eine gitterartige Haftstruktur vorliegen, bei der an den Kreuzungspunkten besonders hohe Peaks oder tiefe Mulden vorliegen können.

In einer Ausführungsform liegt der Abstand zwischen Spitzen der Haftstruktur im Mittel zwischen 50 und 5000 µm. Bei einer Gitterstruktur wäre dies der Abstand zwischen zwei Gitterreihen. Charakteristisch für die Strukturen ist das Verhältnis Höhe der Strukturen / Abstand der Strukturen 0,1 bis 5.

In einer Ausführungsform weist das Bauelement eine Haftstruktur mit einem im Wesentlichen dreieckigen Querschnitt, insbesondere einem gleichschenkligen dreieckigen Querschnitt, auf. Diese Querschnitte, z.B. von linearen Haftstrukturen in Gittern, lassen sich einfach herstellen und bieten eine hinreichend große Fläche für die Haftvermittlung an die keramische Schicht.

Dabei kann die Breite des Querschnitts der Haftstruktur von der Oberfläche der Haftschicht zur Spitze gleichmäßig kleiner werden. Unter einer gleichmäßigen Breitenverringerung kann z.B. eine lineare Abnahme (Dreieckseite) oder eine exponentielle Breitenverringerung verstanden werden. Die Breitenverringerung kann auch aus einer hinterschneidungsfreien Aneinanderreihung von Segmenten (Linien, Kurvensegmenten) bestehen.

Ein besonders einfacher Aufbau liegt vor, wenn der Querschnitt der Haftstruktur symmetrisch zu einer Senkrechten durch die Spitze der Haftstruktur oder der senkrechten Mittelachse der Mulde ist.

Auch kann in einer Ausführungsform das Verhältnis der Höhe des Querschnitts zur Breite an der Basis der Haftstruktur zwischen 0,1 und 10, insbesondere zwischen 1 und 5 liegen. Auch kann die Höhe des Querschnitts der Haftstruktur zwischen 50 und 500 µm, insbesondere zwischen 70 und 150 µm, betragen. Grundsätzlich werden bei Maßangaben die Mittelwerte zu Grunde gelegt.

Ferner kann in einer Ausführungsform die Höhe des Querschnitts der Haftstruktur entlang der Haftstruktur im Wesentlichen konstant sein.

Ausführungsformen können eine Haftstruktur aus metallischem und / oder keramischem Werkstoff aufweisen, mit einem Anteil von
M CrAIY mit M = Fe, Ni, und / oder Co,
M CrAI mit M = Fe, Ni, und / oder Co,
NiAl, oder NiAIPt
Yittrium stabilisiertes Zirkonoxid (YSZ)
Aluminat
Pyrochlor und / oder
Perowskit.

Die keramische Schicht weist mindestens eine oxidische Keramik, enthaltend Magnesium-Spinell und insbesondere Aluminiumoxid, insbesondere Yittrium stabilisiertes Zirkonoxid (YSZ), Pyrochlore oder Perowskite, auf.

Die Aufgabe wird auch durch ein Verfahren mit den Merkmalen des Anspruchs 13 gelöst.

Dabei wird auf eine Basis eine Haftschicht mit einer Haftstruktur aufgebracht und darüber eine keramische Schicht angeordnet.

Dabei wird die Haftstruktur durch ein Laserablationsverfahren hinterschneidungsfrei erzeugt.

Die keramische Schicht enthaltend Magnesium-Spinell, kann z.B. durch ein atmosphärisches Plasmasprayverfahren aufgebracht werden.

Alternativ kann eine YSZ Schicht durch ein atmosphärisches Plasmasprayverfahren auf die Haftschicht aufgebracht werden und darüber eine Magnesium-Spinell-Schicht durch ein Suspensions-Plasma-Spray-Verfahren.

Die Aufgabe wird auch durch eine Turbomaschine mit den Merkmalen des Anspruchs 14 gelöst, wobei das Bauelement als Teil einer Brennkammer, als Teil einer Wandung einer Turbine und / oder im Einlaufbereich eines Hochdruckteils einer Turbine ausgebildet ist.

In Zusammenhang mit den in den Figuren dargestellten Ausführungsbeispielen wird die Erfindung erläutert. Dabei zeigt
- Fig. 1: eine Darstellung eines Teils eines Flugzeugtriebwerkes mit einem Bauelement mit einer Haftstruktur;
- Fig. 2: eine schematische Schnittdarstellung durch eine erste Ausführungsform eines Bauelements mit einer Haftstruktur mit einer Peakstruktur;
- Fig. 3: eine schematische Schnittdarstellung durch eine zweite Ausführungsform eines Bauelements mit einer Haftstruktur;
- Fig. 4: eine schematische Schnittdarstellung durch eine dritte Ausführungsform eines Bauelementes mit einer Haftstruktur mit einer Muldenstruktur;
- Fig. 5: eine perspektivische Darstellung einer weiteren nicht zur Erfindung gehörenden Ausführungsform eines Bauelementes mit einer gitterartigen Haftstruktur;
- Fig. 6: eine mikroskopische Schnittansicht der nicht zur Erfindung gehörenden Ausführungsform aus Fig. 5 mit einer gitterartigen Haftstruktur;
- Fig. 7: eine mikroskopische Schnittansicht einer weiteren Ausführungsform eines Bauelementes;
- Fig. 8A-F: schematische Draufsichten auf Haftstrukturen auf einem Bauelement.

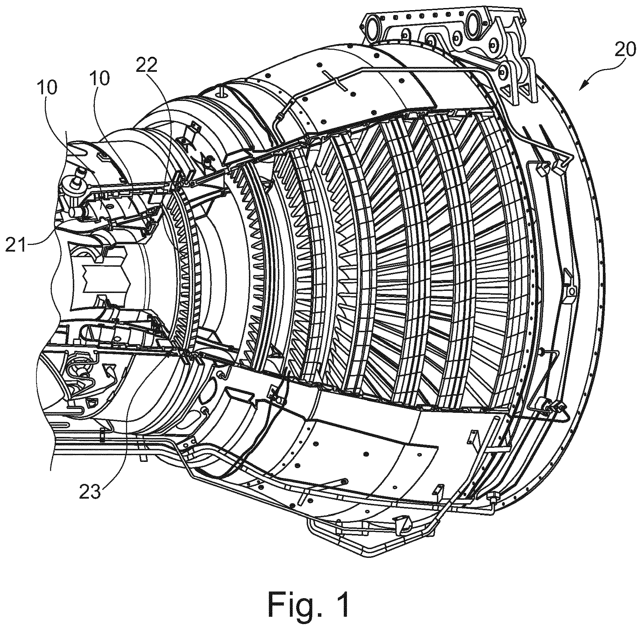

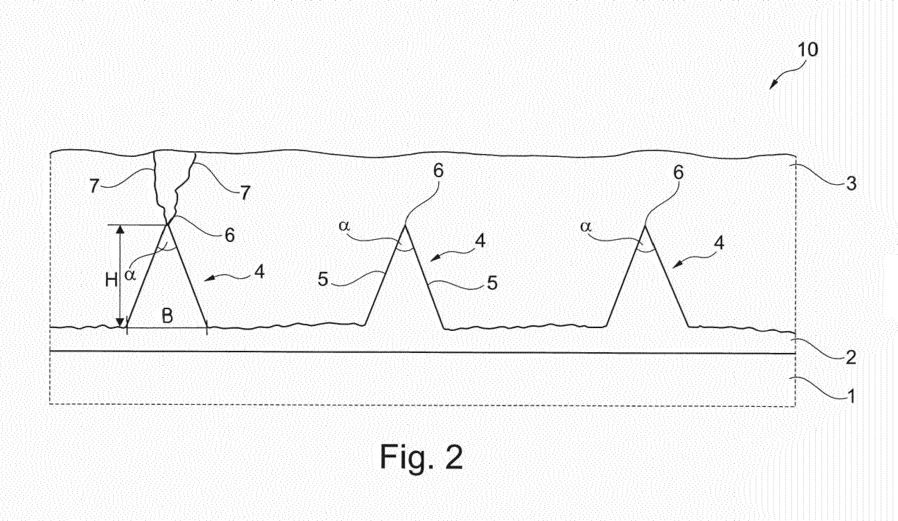

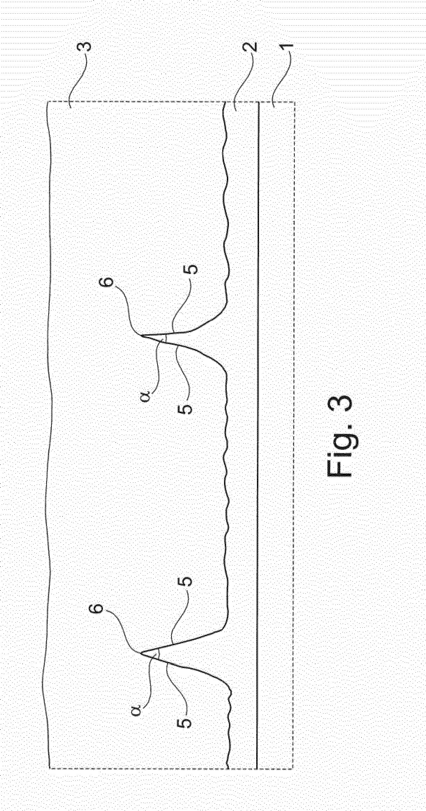

In Fig. 1 ist ausschnittsweise ein Flugzeugtriebwerk 20 als ein Beispiel für eine Turbomaschine dargestellt, in dem temperaturfeste Bauelemente 10 mit einer strukturierten Haftschicht 2 (siehe z.B. Fig. 2 oder 3) eingesetzt werden können, die im Folgenden noch beschrieben werden. Hier ist der axial hintere Teil des Flugzeugtriebwerkes 20 dargestellt, d.h. die Kompressorstufen des Flugzeugtriebwerks 20 sind nicht dargestellt.

Besonders hohe thermische Belastungen liegen in einer Brennkammer 21 vor. Aus diesem Grund können plattenförmige Bauelemente 10 mit einer Haftstruktur 4 (siehe z.B. Fig. 2 oder 3) im Inneren der Brennkammer 21 angeordnet sein.

Die höchste Temperatur liegt beim Austritt der Gase aus der Brennkammer 21 und beim Eintritt in eine Hochdruckstufe 22 der Turbine vor. Daher können zusätzlich oder alternativ Bauelemente 10 in der Hochdruckstufe 22 angeordnet sein. Dabei sind diese Bauelemente 10 nicht als Platten ausgebildet, sondern die Beschichtung ist z.B. direkt im Bereich des Stators der Turbine angeordnet. Damit wird der Bereich des Stators an sich zu dem beschichteten Bauelement 10. Grundsätzlich ist es auch möglich, dass die beschichteten Bauelemente 10 noch Kanäle oder Öffnungen für Kühlmedien aufweisen.

Ferner ist es möglich, auch Schaufeln von Rotoren und / oder Statoren mit der Beschichtung zu versehen, so dass diese zu Bauelementen 10 im Sinne der vorliegenden Beschreibung werden.

Eine weitere Möglichkeit besteht darin, das Bauelement 10 als Beschichtung, d.h. als so genannten Liner 23, in der Wandung der Turbinenwand zu verwenden, d.h. insbesondere in den Bereichen, die den Schaufeln der Rotoren gegenüberliegen. Liner 23 können in Bereichen verwendet werden, in denen Rotorschaufeln z. B. der Turbine zumindest zeitweise mechanischen Kontakt mit der Wandung des Gehäuses haben. Dies ist für die Minimierung des Spaltes zwischen Wandung und Turbinenschaufel zumindest durchaus erwünscht. Die Bauelemente 10 mit Haftstrukturen 4 und einer keramischen Beschichtung 3 weisen nicht nur eine hohe thermische Belastbarkeit auf, sondern sind auch mechanisch so ausgebildet, dass sie als Liner 23 verwendbar sind.

Auch in Brennkammern können Liner 23 verwendet werden, oder die Beschichtung kann direkt Teil der Brennkammerwandung werden.

Grundsätzlich kann das Bauelement 10 an den Stellen eingesetzt werden, an denen üblicherweise dickere Keramikschichten angeordnet werden.

Mit den hier beschriebenen Ausführungsformen ist es möglich, eine feine Strukturierung direkt auf einem Bond-coat (Haftschicht) Material anzubringen, die metallische Basis wird nicht beeinträchtigt. Im Betrieb treten nur geringe thermische Gradienten innerhalb der Bauelemente 10 auf. Auch ist die Haftung der Haftschicht auf dem Basismaterial 1 sehr gut. Diese Ausführungsformen weisen auch einen hohen Widerstand gegen Oxidation auf.

In der Fig. 2 ist in schematischer Weise eine Schnittansicht durch die Oberfläche einer Ausführungsform eines Bauelementes 1 dargestellt.

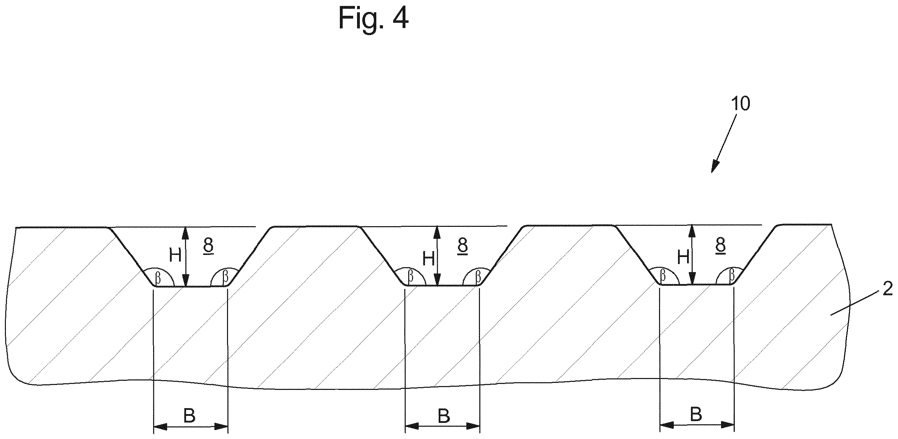

Dabei ist auf einer Basis 1 eine Haftschicht 2 mit Haftstrukturen 4 angeordnet. Die Strukturierung besteht in der dargestellten Ausführungsform aus einer dreidimensionalen Gitterstruktur (siehe z.B. Fig. 4), von der in der Schnittansicht der Fig. 2 nur die Querschnittsflächen von drei Gitterelementen (den Haftstrukturen 4) dargestellt sind.

Die Haftstrukturen 4 sind hier einstückig mit der Haftschicht 2 ausgebildet, da die Haftschicht 2 mit einem ablativen Laserverfahren bearbeitet wurde. Dies bedeutet, die Haftstrukturen 4 sind aus der Haftschicht 2 herausgearbeitet worden, so dass sie sich vertikal von der Oberfläche der Haftschicht 2 erststrecken. Diese wird als Peakstruktur bezeichnet, da sich die Spitzen 6 von einer Grundfläche abheben.

Die Querschnittsflächen der Haftstrukturen 4 sind hier im Wesentlichen dreieckig ausgebildet, wobei die beiden Seitenflächen 5 der Haftstruktur 4 hier gleichlang ausgebildet sind; es liegt eine symmetrische Form vor, wobei die Symmetrieachse von der Spitze 6 senkrecht zur Basis 1 zeigt.

Der Winkel α an der Spitze 6 der Haftstruktur 4 beträgt hier ungefähr 40°. Der Winkel wird von der Spitze 6 zwischen den Seitenflächen 5 gemessen.

In alternativen Ausführungsformen kann der Spitzenwinkel α ≤ 90 betragen.

Des Weiteren sind hier die Seitenflächen 5 gerade ausgebildet, d.h. es liegen insbesondere keine Hinterschneidungen vor.

Oberhalb der Haftschicht 2 ist eine keramische Schicht 3 angeordnet, z.B. aus YSZ (Yittrium stabilisiertes Zirkonoxid) und Magnesium-Spinell.

Die Haftstruktur 4 mit den geneigten Seitenflächen 5 ohne Hinterschneidungen bietet eine gute Verbindung zur keramischen Schicht 3, wobei die Spitzen 6 der Haftstruktur 4 für eine gezielte Segmentierung in der keramischen Schicht 3 sorgen können.

Bei der gezielten Segmentierung werden Risse 7 in der keramischen Schicht 3 induziert, um eine mechanische Spannungsentlastung zu erreichen. Diese vertikalen Risse 7 können sich besonders effizient ausbilden, wenn sich die Haftstruktur 4 nach oben hin, d.h. zur Spitze 6 hinterschneidungsfrei verjüngt.

Die Höhe H der Haftstruktur 4, gemessen von der Oberfläche der Haftschicht 2, beträgt zwischen 50 und 500 µm, in der dargestellten Ausführungsform beträgt die Höhe H ca. 100 µm. Das Verhältnis von Höhe H zur Breite B an der Basis der Haftstruktur 4 (d.h. an der Oberfläche der Haftschicht 2) beträgt hier 1,25. Alternativ kann das Verhältnis H/B im Bereich zwischen 1 und 10 liegen.

Die Ausführungsform gemäß Fig. 3 stellt eine Alternative zu dieser Ausführungsform dar, so dass auf die relevante Beschreibung der Fig. 2 Bezug genommen werden kann.

Auch hier wird die Breite B des Querschnitts der Haftstruktur 4 von der Basis an der Oberfläche zur Haftschicht 2 monoton zur Spitze 6 kleiner. Allerdings sind die Seitenwände 5 hier jeweils zum Inneren hin gekrümmt. In beiden Fällen sind aber die Querschnitte der Haftstruktur 4 symmetrisch zur Senkrechten durch die Spitze 6.

Es sei darauf hingewiesen, dass die hier angegebenen geometrischen Verhältnisse die fertigungstechnische Realität nicht vollständig abbilden können, wie dies z.B. anhand der folgenden Figuren dargestellt wird. So sind die Zahlenwerte insbesondere als Mittelwerte zu verstehen, da es immer fertigungsbedingte Abweichungen gibt.

In der Fig. 4 wird eine weitere Ausführungsform einer hinterschneidungsfreien Haftstruktur dargestellt, nämlich eine Muldenstruktur, d.h. in einer Grundfläche der Haftschicht 2 sind einzelne Mulden 8 eingebracht. Die Mulden 8 weisen jeweils eine im Wesentlichen quadratische oder rechteckige Bodenfläche auf, wobei die Flanken von der Bodenfläche zur Grundfläche der Haftstruktur 2 ansteigen. Der Winkel der Flanken gegenüber der Bodenfläche ist der Talwinkel β der Mulde 8. Dieser Talwinkel β kann dabei zwischen 90 und 170° liegen. Ein Talwinkel von β=90° würde senkrechten Wänden entsprechen. Bei Muldenstrukturen kann das Verhältnis der Höhe H des Querschnitts zur Breite B an der Basis der Haftstruktur 4 auch kleiner als 1 sein, so dass ein Bereich für das Verhältnis zwischen 0,1 und 10 möglich ist.

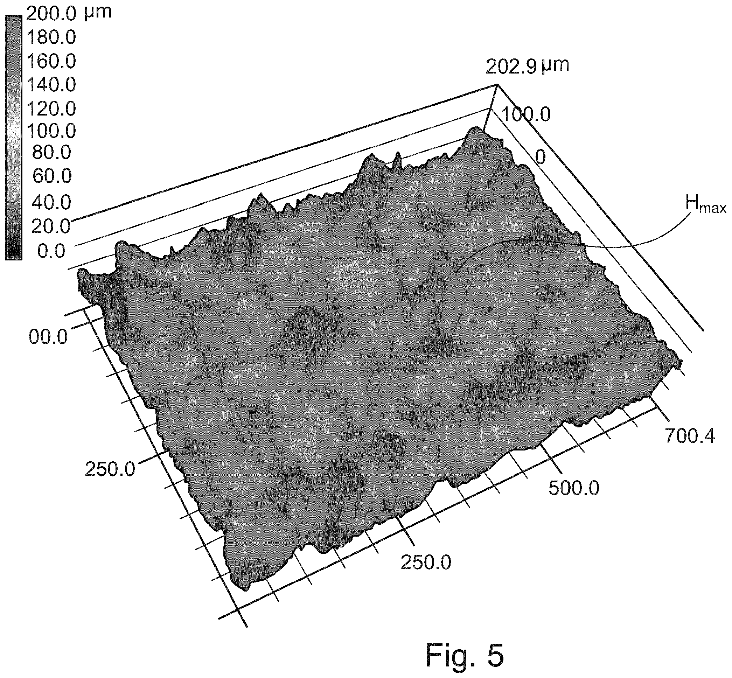

In der Fig. 5 (Confocal Laser Microscopelmage) ist eine nicht zur Erfindung gehörenden Ausführungsform für eine gitterartige Haftstruktur 4 dargestellt, bei der eine Haftschicht 2 aus CoNiCrAIY - nach dem Aufbringen auf die in Fig. 4 nicht dargestellte Basis - mit einem ablativen Laserverfahren strukturiert wird. Auf die Haftschicht 2 wird eine keramische Beschichtung 2 aus YSZ und Magnesium-Spinell durch ein atmosphärisches Plasmasprayverfahren aufgebracht.

Im Folgenden werden einige Parameter des Laserablationsverfahrens zur Herstellung der Haftstruktur angeführt:
- Laserleistung: im kW Bereich bei der Peakleistung (die dargestellten Beispiele wurden mit einem TrumphTruMark 5020 Laser (Nd:YAG) mit einer Wellenlänge von 1062 nm erzeugt.)
- Pulslänge, im 100 Nanometerbereich
- Frequenz einige 100 kHz
- Strahldurchmesser (einige 10um)
- Anzahl der hintereinander erfolgenden Pulse im Bereich von 2 bis 10.
- Einbringen der Haftstrukturen mit einem Mäanderprogramm

Die Haftstrukturen 4 sind hier als Gitter ausgebildet, bei dem sich die Gitterlinien im Wesentlichen rechtwinklig schneiden. Die Seitenlängen der Gitterzellen sind im Wesentlichen gleich, so dass ein quadratisches Strukturmuster entsteht. An den Kreuzungspunkten der Gitterlinien der Haftstruktur 4 ist die maximale Höhe Hmax des Querschnitts der Haftstruktur 4 höher als die Höhe H der Haftstruktur 4 außerhalb der Kreuzungspunkte. Zwischen den Kreuzungspunkten ist die Höhe H der Gitterstruktur 4 im Wesentlichen konstant.

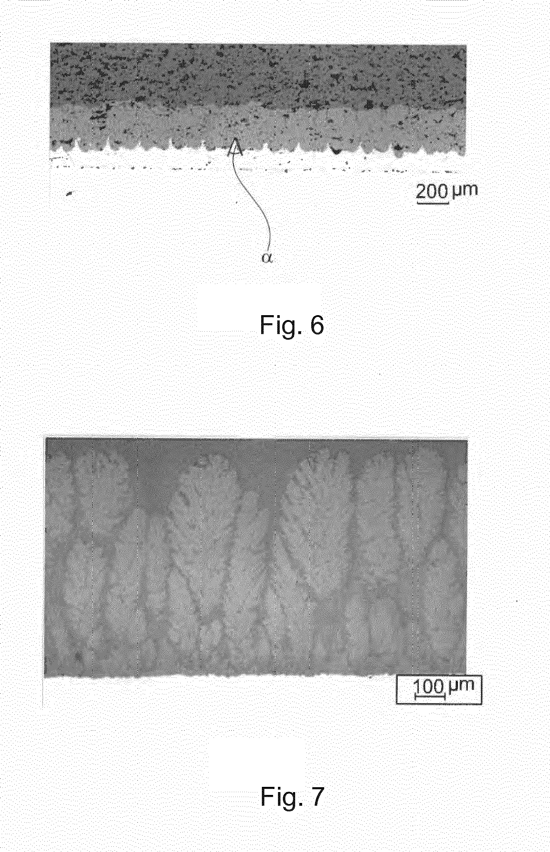

In der hochaufgelösten Darstellung der Fig. 5 sind die Abweichungen von der idealisierten Darstellung der Fig. 2 und 3 deutlich. Es ist aber erkennbar, dass die Haftstruktur 4 im Querschnitt hinterschneidungsfrei und der Spitzenwinkel α kleiner als 90° ist. Dies ist in dem Schnittbild der Fig. 6 (REM Aufnahme) ebenfalls deutlich erkennbar. Die Schnittebene liegt hier senkrecht zu den Gitterlinien. An einer Stelle ist der Spitzenwinkel α der Haftstruktur 4 eingezeichnet.

In der Fig. 7 ist eine REM-Schnittaufnahme durch eine andere Ausführungsform eines Bauelementes 10 dargestellt. Dabei ist nur die SPS-Mg-Spinel-Schicht dargestellt Auch hier wird eine Haftschicht 2 aus CoNiCrAIY mit einem ablativen Laserverfahren bearbeitet, um eine hinterschneidungsfreie Haftstruktur 4 zu erzeugen, die im Mittel einen Spitzenwinkel von weniger als 90° aufweist.

Auf die Haftschicht 2 wird mit einem atmosphärischen Plasmasprayverfahren eine YSZ Schicht aufgebracht. Dann wird mit einem Suspension-Plasma-Sprayverfahren (SPS) eine Magnesium-Spinell-Schicht aufgebracht, die bereits einen gewissen Grad an Segmentierung aufweist. Die keramische Schicht 3 weist hier somit zwei Lagen aus unterschiedlichen Materialien auf.

Die Verwendung eines ablativen Laserverfahrens zur Strukturierung ist wirtschaftlich günstig. Auch ist es nicht erforderlich, komplexe Spitzenstrukturen auszuformen.

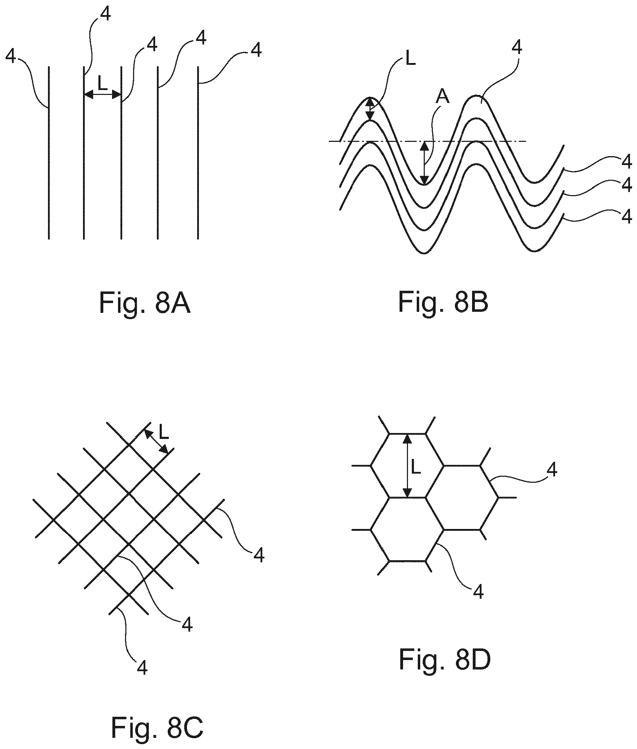

In den Fig. 8A bis 8F werden unterschiedliche Haftstrukturen 4 dargestellt. Die Haftstrukturen 4 sollen insbesondere ein großflächiges Abplatzen der keramischen Hochtemperaturbeschichtung 3 verhindern. Auch können sich Risse in der Hochtemperaturbeschichtung 3 in horizontaler Richtung nicht beliebig weit ausdehnen. Dabei können die Haftstrukturen 4 einander kreuzen oder parallel zueinander angeordnet werden.

In Fig. 8A ist eine Haftstruktur 4 dargestellt, die aus parallelen, linearen Elementen gebildet ist. Der Abstand L zwischen den Spitzen 6 beträgt dabei zwischen 500 und 5000 µm. Haftstrukturen 4 müssen aber nicht zwingend nur lineare Elemente aufweisen.

In Fig. 8B ist eine wellenförmige Haftstruktur 4 aus parallel zueinander liegenden, gekrümmten Elementen dargestellt, welche jedoch nicht Teil der vorliegenden Erfindung ist. Auch hier beträgt der Abstand L zwischen den Elementen zwischen 500 und 5000 µm. Besonders bei einer Amplitude der Wellenstruktur, die größer als der Abstand L zwischen den Strukturelementen ist, kann eine Rissfortpflanzung wirksam unterbunden werden.

In Fig. 8C ist eine nicht zur Erfindung gehörende Ausführungsform dargestellt, bei der sich die Elemente schneiden. Es entsteht eine Gitterstruktur, wie z.B. in Fig. 5 dargestellt, wobei der Abstand L zwischen den parallelen Elementen (d.h. zwischen den Spitzen) zwischen 500 und 5000 µm beträgt.

In Fig. 8D ist ein wabenförmiges Muster dargestellt, das aus linearen Elementen aufgebaut ist, wobei dieses Muster allein nicht Teil der Erfindung ist.

Der Abstand L zwischen zwei parallelen Elementen beträgt zwischen 500 und 5000 µm.

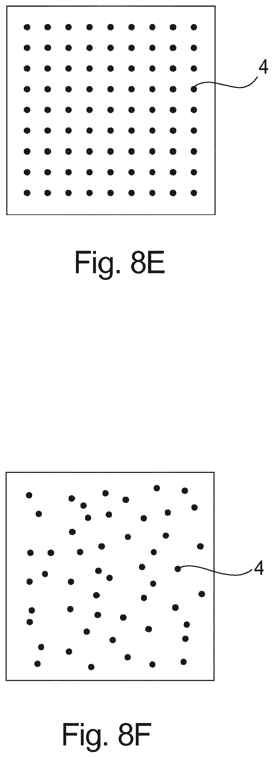

In der Fig. 8E ist ein nicht zur Erfindung gehörendes Punktmuster dargestellt, wie es z.B. in einem Peakmuster vorliegt

Dabei kann das Peakmuster durchaus regelmäßig, wie in Fig. 8E dargestellt, oder auch zufällig, wie in Fig. 8F, ausgebildet sein.

Grundsätzlich ist es möglich, an einem Bauelement 10 mehrere unterschiedlich geformte hinterschneidungsfreie Haftstrukturen 4 und / oder auch Muster anzuordnen. So kann insbesondere der Abstand L in einem Muster variiert werden, um eine optimale Anpassung des Bauteils 10 an thermische Belastungen sicherzustellen.

Auch ist es grundsätzlich möglich, die Muster, z.B. die in Fig. 8A bis 8E dargestellten Muster, miteinander zu kombinieren.

### Bezugszeichenliste

- 1: Basis
- 2: Haftschicht (Bond coat)
- 3: keramische Schicht
- 4: Haftstruktur der Haftschicht
- 5: Seitenflächen der Haftstruktur
- 6: Spitze des Querschnitts einer Peakstruktur
- 7: Riss in keramischer Schicht
- 8: Mulde einer Muldenstruktur

- 10: Bauelement

- 20: Flugzeugtriebwerk (Turbomaschine)
- 21: Brennkammer
- 22: Hochdruckstufe einer Turbine
- 23: Liner

- α: Spitzenwinkel im Querschnitt einer Peakstruktur der Haftstruktur
- β: Talwinkel im Querschnitt einer Muldenstruktur der Haftstruktur

- B: Breite des Querschnitts der Haftstruktur
- H: Höhe des Querschnitts der Haftstruktur
- Hmax: Höhe des Querschnitts der Haftstruktur an Kreuzungspunkten
- L: Abstand zwischen Spitzen einer Haftstruktur

## Patentansprüche

1. Bauelement (10), besonders eingerichtet und ausgebildet zur Verwendung in einer Turbomaschine, insbesondere einem Flugzeugtriebwerk, wobei auf einer Basis (1) eine Haftschicht (2) mit einer Haftstruktur (4) und darüber eine keramische Schicht (3) angeordnet ist, wobei
die Seitenflächen (5) der Haftstruktur (4) im Querschnitt hinterschneidungsfrei ausgebildet sind, wobei Peakstrukturen und / oder Muldenstrukturen vorliegen,
und die Spitze des Querschnitts einer Peakstruktur im Mittel einen Spitzenwinkel (a) kleiner gleich 90°, ganz insbesondere kleiner 45°, aufweist und / oder die Muldenstruktur einen Talwinkel (β) im Bereich 90° ≤ β < 170° aufweist, wobei der Winkel der Flanken gegenüber der Bodenfläche der Talwinkel β der Mulde ist,
**dadurch gekennzeichnet, dass**
die keramische Schicht (3) mindestens eine oxidische Keramik enthaltend Magnesium-Spinell aufweist und
das Verhältnis der Höhe (H) der Haftstrukturen (4) zum Abstand der Haftstrukturen (4) im Bereich von 0,1 bis 5, insbesondere zwischen 0,3 und 3, liegt und dass die Haftstruktur als Linienstruktur ausgebildet ist.

2. Bauelement (10) nach Anspruch 1, **dadurch gekennzeichnet, dass**
das Verhältnis der Dicke der Haftschicht (2) zur Höhe (H) der Haftstruktur (4) im Bereich von 0,1 bis 10, insbesondere zwischen 0,3 und 3 liegt.

3. Bauelement (10) nach Anspruch 1 oder 2, **dadurch gekennzeichnet, dass** das Bauelement eine strukturierte Oberfläche mit einer mittleren Rauheit Rₐ von nominal 5 µm bis 25 µm aufweist.

4. Bauelement (10) nach mindestens einem der vorhergehenden Ansprüche, **dadurch gekennzeichnet, dass** die Haftstruktur (4) als Überlagerung mit einer Punktstruktur, einer Gitterstruktur oder einer Wabenstruktur ausgebildet ist.

5. Bauelement (10) nach Anspruch 4, **dadurch gekennzeichnet, dass** die maximale Höhe (Hmax) des Querschnitts der Haftstruktur (4) an Kreuzungspunkten der Haftstruktur (4), insbesondere in einer Gitterstruktur (4) zur Höhe (H) der Haftstruktur (4) außerhalb der Kreuzungspunkte, variieren kann.

6. Bauelement (10) nach mindestens einem der vorhergehenden Ansprüche, **dadurch gekennzeichnet, dass** die Haftstruktur (4) im Wesentlichen einen dreieckigen Querschnitt, insbesondere einen gleichschenkligen dreieckigen Querschnitt aufweist.

7. Bauelement (10) nach mindestens einem der vorhergehenden Ansprüche, **dadurch gekennzeichnet, dass** die Breite (B) des Querschnitts der Haftstruktur (4) von der Oberfläche der Haftschicht (2) zur Spitze (6) gleichmäßig kleiner wird.

8. Bauelement (10) nach mindestens einem der vorhergehenden Ansprüche, **dadurch gekennzeichnet, dass** der Querschnitt der Haftstruktur (4) symmetrisch zu einer Senkrechten durch die Spitze (6) oder zur vertikalen Mittelachse einer Mulde (8) ist.

9. Bauelement (10) nach mindestens einem der vorhergehenden Ansprüche, **dadurch gekennzeichnet, dass** Verhältnis der Höhe (H) des Querschnitts zur Breite (B) an der Basis der Haftstruktur (4) zwischen 0,1 und 10, insbesondere zwischen 1 und 5 liegt.

10. Bauelement (10) nach mindestens einem der vorhergehenden Ansprüche, **dadurch gekennzeichnet, dass**
die Höhe (H) des Querschnitts der Haftstruktur (4) zwischen 50 und 500 µm, insbesondere zwischen 70 und 150 µm, beträgt und / oder
die Höhe (H) des Querschnitts der Haftstruktur (4) entlang der Haftstruktur (4) im Wesentlichen konstant ist.

11. Bauelement (10) nach mindestens einem der vorhergehenden Ansprüche, **dadurch gekennzeichnet, dass** die Haftstruktur (4) aus metallischem und / oder keramischem Werkstoff hergestellt ist, mit einem Anteil von
M CrAIY mit M = Fe, Ni, und / oder Co,
M CrAI mit M = Fe, Ni, und / oder Co,
NiAl, oder NiAIPt
Yittrium stabilisiertes Zirkonoxid (YSZ)
Aluminate
Pyrochlore und / oder
Perowskit.

12. Bauelement (10) nach mindestens einem der vorhergehenden Ansprüche, **dadurch gekennzeichnet, dass** der Abstand zwischen Spitzen (6) der Haftstruktur (4) im Mittel zwischen 50 und 5000 µm liegt.

13. Verfahren zur Herstellung eines Bauelementes (10) für eine Turbomaschine nach mindestens einem der vorhergehenden Ansprüche, wobei auf eine Basis (1) eine Haftschicht (2) mit einer Haftstruktur (4) aufgebracht wird und darüber eine keramische Schicht (3) angeordnet wird, wobei die Haftstruktur (4) der Haftschicht (2) durch ein Laserablationsverfahren erzeugt wird,
**dadurch gekennzeichnet, dass**
eine Magnesium-Spinell-Schicht durch ein atmosphärisches Plasmasprayverfahren aufgebracht wird, oder
eine YSZ-Schicht durch ein atmosphärisches Plasmasprayverfahren auf die Haftschicht (2) aufgebracht wird und darüber eine Magnesium-Spinell-Schicht durch ein Suspension-Plasma-Spray-Verfahren aufgebracht wird und
das Verhältnis der Höhe (H) der Haftstrukturen (4) zum Abstand der Haftstrukturen (4) im Bereich von 0,1 bis 5, insbesondere zwischen 0,3 und 3, liegt und dass die Haftstruktur als Linienstruktur ausgebildet ist

14. Turbomaschine, insbesondere ein Flugzeugtriebwerk, **gekennzeichnet durch** mindestens ein Bauelement (10) nach mindestens einem der Ansprüche 1 bis 12, wobei das Bauelement (10) als Teil einer Brennkammer, als Teil einer Wandung einer Turbine und / oder im Einlaufbereich eines Hochdruckteils einer Turbine ausgebildet ist.

## Claims

1. Component (10), especially configured and designed for use in a turbomachine, in particular an aircraft engine, wherein arranged on a base (1) is an adhesive layer (2) with an adhesive structure (4) and, on top of said adhesive layer, a ceramic layer (3), wherein
the lateral surfaces (5) of the adhesive structure (4) have an undercut-free form in cross section, wherein peak structures and/or trough structures are present,
and the tip of the cross section of a peak structure has on average an acute angle (α) which is smaller than or equal to 90°, very particularly smaller than 45°, and/or the trough structure has a valley angle (β) in the range of 90° ≤ β < 170°, wherein the angle of the flanks with respect to the base surface is the valley angle β of the trough,
**characterized in that**
the ceramic layer (3) comprises magnesium spinel containing at least one oxidic ceramic, and
the ratio of the height (H) of the adhesive structures (4) to the spacing between the adhesive structures (4) is in the range of from 0.1 to 5, in particular between 0.3 and 3, and **in that** the adhesive structure is in the form of a line structure.

2. Component (10) according to Claim 1, **characterized in that**
the ratio of the thickness of the adhesive layer (2) to the height (H) of the adhesive structure (4) is in the range of from 0.1 to 10, in particular between 0.3 and 3.

3. Component (10) according to Claim 1 or 2, **characterized in that** the component has a structured surface with an average roughness Rₐ of nominally 5 µm to 25 µm.

4. Component (10) according to at least one of the preceding claims, **characterized in that** the adhesive structure (4) is in the form of an overlay with a dot structure, a grid structure or a honeycomb structure.

5. Component (10) according to Claim 4, **characterized in that** the maximum height (Hmax) of the cross section of the adhesive structure (4) at crossing points of the adhesive structure (4), in particular in a grid structure (4), can vary in relation to the height (H) of the adhesive structure (4) outside the crossing points.

6. Component (10) according to at least one of the preceding claims, **characterized in that** the adhesive structure (4) substantially has a triangular cross section, in particular an isosceles-triangular cross section.

7. Component (10) according to at least one of the preceding claims, **characterized in that** the width (B) of the cross section of the adhesive structure (4) becomes uniformly smaller from the surface of the adhesive layer (2) to the tip (6).

8. Component (10) according to at least one of the preceding claims, **characterized in that** the cross section of the adhesive structure (4) is symmetrical in relation to a vertical line through the tip (6) or in relation to the vertical centre axis of a trough (8).

9. Component (10) according to at least one of the preceding claims, **characterized in that** the ratio of the height (H) of the cross section to the width (B) at the base of the adhesive structure (4) is between 0.1 and 10, in particular between 1 and 5.

10. Component (10) according to at least one of the preceding claims, **characterized in that**
the height (H) of the cross section of the adhesive structure (4) amounts to between 50 and 500 µm, in particular between 70 and 150 µm, and/or
the height (H) of the cross section of the adhesive structure (4) is substantially constant along the adhesive structure (4).

11. Component (10) according to at least one of the preceding claims, **characterized in that** the adhesive structure (4) is produced from metallic and/or ceramic material, with a proportion of
M CrAlY with M = Fe, Ni, and/or Co,
M CrAl with M = Fe, Ni, and/or Co,
NiAl, or NiAlPt
yttrium-stabilized zirconium oxide (YSZ) aluminates
pyrochlores and/or
perovskite.

12. Component (10) according to at least one of the preceding claims, **characterized in that** the spacing between tips (6) of the adhesive structure (4) is on average between 50 and 5000 µm.

13. Method for producing a component (10) for a turbomachine according to at least one of the preceding claims, wherein an adhesive layer (2) with an adhesive structure (4) is applied to a base (1) and, on top of said adhesive layer, a ceramic layer (3) is arranged, wherein the adhesive structure (4) of the adhesive layer (2) is created by a laser ablation process,
**characterized in that**
a magnesium-spinel layer is applied by an atmospheric plasma-spraying process, or
an YSZ layer is applied to the adhesive layer (2) by an atmospheric plasma-spraying process and, on top of said adhesive layer, a magnesium-spinel layer is applied by a suspension plasma-spraying process, and
the ratio of the height (H) of the adhesive structures (4) to the spacing between the adhesive structures (4) is in the range of from 0.1 to 5, in particular between 0.3 and 3, and **in that** the adhesive structure is in the form of a line structure.

14. Turbomachine, in particular an aircraft engine, **characterized by** at least one component (10) according to at least one of Claims 1 to 12, wherein the component (10) is formed as part of a combustion chamber, as part of a wall of a turbine and/or in the intake region of a high-pressure part of a turbine.

## Revendications

1. Composant (10), notamment adapté et configuré pour être utilisé dans une turbomachine, notamment dans un moteur d'aéronef, une couche adhésive (2) munie d'une structure adhésive (4) et, au-dessus, une couche céramique (3) étant agencées sur une base (1),
les surfaces latérales (5) de la structure adhésive (4) étant configurées sans contre-dépouille dans la section transversale, des structures de pic et/ou des structures de dépression étant présentes,
et les crêtes de la section transversale d'une structure de pic présentant en moyenne un angle de crête (a) inférieur ou égal à 90°, tout particulièrement inférieur à 45°, et/ou la structure de dépression présentant un angle de creux (β) dans la plage 90° ≤ β < 170°, l'angle des flancs par rapport à la surface de fond étant l'angle de creux β de la dépression,
**caractérisé en ce que**
la couche céramique (3) comprend au moins une céramique oxydique contenant de la spinelle de magnésium et
le rapport de la hauteur (H) des structures adhésives (4) à l'écart des structures adhésives (4) se situe dans la plage allant de 0,1 à 5, notamment entre 0,3 et 3, et **en ce que** la structure adhésive est configurée sous la forme d'une structure linéaire.

2. Composant (10) selon la revendication 1, **caractérisé en ce que**
le rapport de l'épaisseur de la couche adhésive (2) à la hauteur (H) de la structure adhésive (4) se situe dans la plage allant de 0,1 à 10, notamment entre 0,3 et 3.

3. Composant (10) selon la revendication 1 ou 2, **caractérisé en ce que** le composant présente une surface structurée ayant une rugosité moyenne Rₐ nominale de 5 µm à 25 µm.

4. Composant (10) selon au moins l'une quelconque des revendications précédentes, **caractérisé en ce que** la structure adhésive (4) est configurée sous la forme d'une superposition avec une structure ponctuelle, une structure en grille ou une structure en nid d'abeilles.

5. Composant (10) selon la revendication 4, **caractérisé en ce que** la hauteur maximale (Hmax) de la section transversale de la structure adhésive (4) peut varier au niveau de points de croisement de la structure adhésive (4), notamment dans une structure en grille (4) par rapport à la hauteur (H) de la structure adhésive (4) en dehors des points de croisement.

6. Composant (10) selon au moins l'une quelconque des revendications précédentes, **caractérisé en ce que** la structure adhésive (4) présente essentiellement une section transversale triangulaire, notamment une section transversale triangulaire isocèle.

7. Composant (10) selon au moins l'une quelconque des revendications précédentes, **caractérisé en ce que** la largeur (B) de la section transversale de la structure adhésive (4) devient uniformément plus petite à partir de la surface de la couche adhésive (2) vers la crête (6) .

8. Composant (10) selon au moins l'une quelconque des revendications précédentes, **caractérisé en ce que** la section transversale de la structure adhésive (4) est symétrique par rapport à une perpendiculaire passant à travers la crête (6) ou par rapport à l'axe médian vertical d'une dépression (8).

9. Composant (10) selon au moins l'une quelconque des revendications précédentes, **caractérisé en ce que** le rapport de la hauteur (H) de la section transversale à la largeur (B) au niveau de la base de la structure adhésive (4) est compris entre 0,1 et 10, notamment entre 1 et 5.

10. Composant (10) selon au moins l'une quelconque des revendications précédentes, **caractérisé en ce que** la hauteur (H) de la section transversale de la structure adhésive (4) est comprise entre 50 et 500 µm, notamment entre 70 et 150 µm, et/ou
la hauteur (H) de la section transversale de la structure adhésive (4) est essentiellement constante le long de la structure adhésive (4).

11. Composant (10) selon au moins l'une quelconque des revendications précédentes, **caractérisé en ce que** la structure adhésive (4) est fabriquée à partir de matériau métallique et/ou céramique, avec une proportion
de M CrAlY avec M = Fe, Ni et/ou Co,
de M CrAl avec M = Fe, Ni et/ou Co,
de NiAl ou NiAlPt,
d'oxyde de zirconium stabilisé par de l'yttrium (YSZ), d'aluminates,
de pyrochlore et/ou
de pérovskite.

12. Composant (10) selon au moins l'une quelconque des revendications précédentes, **caractérisé en ce que** l'écart entre les crêtes (6) de la structure adhésive (4) se situe en moyenne entre 50 et 5 000 µm.

13. Procédé de fabrication d'un composant (10) pour une turbomachine selon au moins l'une quelconque des revendications précédentes, une couche adhésive (2) munie d'une structure adhésive (4) étant appliquée sur une base (1) et une couche céramique (3) étant agencée au-dessus, la structure adhésive (4) de la couche adhésive (2) étant générée par un procédé d'ablation laser,
**caractérisé en ce que**
une couche de spinelle de magnésium est appliquée par un procédé de projection plasma atmosphérique, ou
une couche YSZ est appliquée sur la couche adhésive (2) par un procédé de projection plasma atmosphérique et une couche de spinelle de magnésium est appliquée au-dessus par un procédé de projection plasma de suspension, et
le rapport de la hauteur (H) des structures adhésives (4) à l'écart des structures adhésives (4) se situe dans la plage allant de 0,1 à 5, notamment entre 0,3 et 3, et **en ce que** la structure adhésive est configurée sous la forme d'une structure linéaire.

14. Turbomachine, notamment moteur d'aéronef, **caractérisée par** au moins un composant (10) selon au moins l'une quelconque des revendications 1 à 12, le composant (10) étant configuré en tant que partie d'une chambre de combustion, en tant que partie d'une paroi d'une turbine et/ou dans la zone d'entrée d'une partie haute pression d'une turbine.
